# EUROPÄISCHE PATENTANMELDUNG

(11) **EP 1 369 701 A2**
(43) Veröffentlichungstag der Anmeldung: **10.12.2003**
(21) Anmeldenummer: 03012400.2
(22) Anmeldetag: 30.05.2003
(51) Int. Cl.: G01S 5/02

(54) **Verfahren und System zur Positionsbestimmung eines Mobilgeräts in einem Kommunikationssystem**

(30) Priorität: 31.05.2002 DE 10224501
(71) Anmelder: ARtem GmbH, 89073 Ulm (DE)
(72) Erfinder: Marsanu, Michael, 89073 Ulm (DE)
(74) Vertreter: Weber, Gerhard, Dipl.-Phys.

(57) **Zusammenfassung**

Bestimmung der Position eines Mobilgeräts im Gebiet eines drahtlosen Kommunikationsgebiets anhand von Signalpegeln.

## Beschreibung

Die Erfindung betrifft ein Verfahren zur Bestimmung der Position eines für drahtlose Datenkommunikation ausgerüsteten Mobilgeräts innerhalb eines von einem drahtlosen Kommunikationssystem mit mehreren räumlich verteilten Basisstationen abgedeckten Gebiets sowie ein solches drahtloses Kommunikationssystem.

Eine zunehmende Zahl von datenverarbeitenden Mobilgeräten ist für drahtlose Kommunikation ausgerüstet, insbesondere in Form von an Geräteschnittstellen angeschlossenen Adaptern oder Zusatzgeräten. Solche Mobilgeräte sind damit in der Lage, mit drahtlosen Kommunikationssystemen eine Datenkommunikationsverbindung aufzubauen, welche typischerweise als Funkverbindung ausgeführt ist. Lokal begrenzte derartige Kommunikationssysteme können beispielsweise in Gebäuden, Werksgeländen, Messegeländen etc. vorliegen.

Sowohl für die optimale Abwicklung der Datenkommunikation durch die Systemadministration als auch für den Benutzer des Mobilgeräts kann die Kenntnis der aktuellen Position im Gebiet von Vorteil sein. Beispielsweise kann je nach Position des Benutzers innerhalb des Dienstbereichs einer Basisstation mit innerhalb dieses Dienstbereichs hoher räumlicher Differenzierung eine auf die aktuelle Position bezogene Information auf das Mobilgerät übermittelt werden, welche bei Positionsveränderung auch innerhalb desselben Dienstbereichs fortlaufend aktualisiert bzw. gewechselt werden kann.

Positionsbestimmungen aus Schnittpunktpeilungen, aus Laufzeit- oder Phasenmessungen sind hinsichtlich der benötigten Sende- und Empfangsgeräte aufwendig und in Umgebungen mit Mehrwegeausbreitungen auch unsicher.

Eine Positionsbestimmung ist aber prinzipiell auch anhand von Pegelmessungen von Empfangssignalen aus Funkverbindungen mehrerer Basisstationen mit dem Mobilgerät möglich. Eine solche Positionsbestimmung eines Mobilgeräts in einem Kommunikationssystem ist beispielsweise durch das Auswertesystem "Positioning engine"des Herstellers EKAHAU möglich, bei welchem das Mobilgerät in einem vorzugsweise zugleich für die Abwicklung der Datenkommunikation über die Funkverbindung benutzten Zusatzgerät die Signalpegel der von verschiedenen Basisstationen empfangenen Funksignale bestimmt und die Pegelwerte mit Zuordnung zu den verschiedenen Basisstationen an eine Auswerteeinrichtung im Kommunikationssystem übermittelt, welche anhand der übermittelten Signalpegel eine Schätzung der Geräteposition vornimmt.

Der Erfindung liegt die Aufgabe zugrunde, ein derartiges Verfahren zur Bestimmung der Position eines Mobilgeräts anhand von Signalpegeln weiter zu verbessern und ein Kommunikationssystem hierzu anzugeben.

Erfindungsgemäße Lösungen sind in den unabhängigen Patentansprüchen beschrieben. Die abhängigen Ansprüche enthalten vorteilhafte Ausgestaltungen und Weiterbildungen der Erfindung.

Durch die Pegelmessung in den Basisstationen können die Sende-Empfangs-Einrichtungen des Mobilgeräts bedeutend einfacher gehalten werden und die zusätzliche Übermittlung der Pegelwerte vom Mobilgerät an die Auswerteeinrichtung entfällt.

Vorteilhafterweise senden die Basisstationen in regelmäßigen Zeitabständen oder nach Bedarf Anforderungssignale, welche individuell an ein Mobilgerät adressiert oder auch an alle Mobilgeräte gerichtet sein können. Auf solche Anforderungssignale senden die Mobilgeräte Antwortsignale über die Funkverbindung zurück, für welche in den Basisstationen die Pegel bestimmt werden, wobei in der Basisstation aus dem Antwortsignal zugleich auch das individuelle Mobilgerät erkannt wird. Die Basisstationen leiten die Pegelinformationen mit Zuordnung zu den individuellen Mobilgeräten an die zentrale Auswerteeinrichtung weiter, welche eine Positionsschätzung für die verschiedenen Mobilgeräte im Gebiet des Kommunikationssystems durchführt.

Besonders vorteilhaft ist eine Ausführung, gemäß welcher die Mobilgeräte aus Datenendgeräten und mit diesen lösbar verbundenen Adaptereinrichtungen zusammengesetzt sind, wobei die Datenendgeräte typischerweise von dem drahtlosen Kommunikationssystem unabhängige, insbesondere auch von Fremdbenutzern mitgebrachte eigene Geräte wie insbesondere Laptops oder dergleichen sein können und die Adaptereinrichtungen über standardisierte Schnittstellen wie USB, LAN etc. lösbar mit diesen systemunabhängigen Datenendgeräten verbunden sind und die Schnittstelle zur drahtlosen Kommunikation enthalten. Im Gegensatz zu den vom Kommunikationssystem unabhängigen Datenendgeräten sind die Adaptereinrichtungen vorteilhafterweise speziell auf das drahtlose Kommunikationssystem abgestimmt. Die Adaptereinrichtungen können dabei vorzugsweise z.B. vom Betreiber des drahtlosen Kommunikationssystems für den zeitlich begrenzten Aufenthalt eines Benutzers im Bereich des drahtlosen Kommunikationssystems leihweise zur Verfügung gestellt werden.

Die Adaptereinrichtungen können vorteilhafterweise so eingerichtet sein, dass sie auf von den Basisstationen ausgesandten Anforderungssignale durch Rücksenden von Antwortsignalen, welche vorteilhafterweise eine Kennung der Adaptereinrichtung und/oder des Datenendgeräts enthalten, reagieren. Die Rücksendung von Antwortsignalen erfolgt dabei vorzugsweise ohne Einbindung und ohne Einflussmöglichkeit des angeschlossenen Datenendgeräts bzw. dessen Benutzer (ggf. mit Ausnahme der elektrischen Leistungsversorgung der Adaptereinrichtung aus dem Datenendgerät), so dass durch das Kommunikationssystem auch eine eigenständige Überwachung der Bewegungen im Bereich des Systems möglich ist.

Die geschätzte Geräteposition kann einer Plausibilitätsprüfung unterworfen werden. Bei ein vorgebbares Maß überschreitender Abweichung der geschätzten Position von einer plausiblen Position oder bei Unterschreiten einer Wahrscheinlichkeitsschwelle für eine geschätzte Position kann der Benutzer des betroffenen Geräts über die bestehende Funkverbindung aufgefordert werden, eine Kalibrierprozedur durchzuführen. Hierfür kann insbesondere vorgesehen sein, dass der Benutzer sich mit dem Gerät an eine von vorzugsweise mehreren als solche gekennzeichneten Kalibrierpositionen begibt und die Empfangssignalpegel bei an dieser definierten Position befindlichem Gerät gemessen werden und als Referenz für die eventuell erforderliche Korrektur von in der Auswerteeinrichtung für die Positionsbestimmung zu diesem Gerät vorliegenden Parametern dienen.

Die Positionsbestimmung anhand der Signalpegel kann insbesondere auch Zeitverläufe von Signalpegeln und statistische Verteilungen in die Auswertung einbeziehen und Wahrscheinlichkeiten für geschätzte Positionen berechnen. Die Auswertung der gemessenen Pegelwerte als solche ist aber nicht Gegenstand der vorliegenden Erfindung und wird als bekannt oder dem Fachmann prinzipiell möglich vorausgesetzt.

Die vorstehend und die in den Ansprüchen angegebenen sowie die den Abbildungen entnehmbaren Merkmale sind sowohl einzeln als auch in verschiedener Kombination vorteilhaft realisierbar. Die Erfindung ist nicht auf die beschriebenen Ausführungsbeispiele beschränkt, sondern im Rahmen fachmännischen Könnens in mancherlei Weise abwandelbar.

## Patentansprüche

1. Verfahren zur Positionsbestimmung eines Mobilgeräts, welches sich innerhalb des Gebiets eines lokalen drahtlosen Kommunikationssystems mit einer Mehrzahl von räumlich verteilten Basisstationen befindet und mit wenigstens einer Basisstation Funkverbindung hat, aus welcher Empfangssignalpegel ermittelt und zur Positionsbestimmung herangezogen werden, **dadurch gekennzeichnet, dass** in der wenigstens einen Basisstation Empfangssignalpegel für von dem Mobilgerät empfangene Signale bestimmt und zur Positionsbestimmung herangezogen werden.

2. Verfahren nach Anspruch 1, **dadurch gekennzeichnet, dass** die Basisstation Anforderungssignale abstrahlt und die Pegelbestimmung anhand von darauf von dem Mobilgerät abgesandten Antwortsignalen erfolgt.

3. Verfahren nach Anspruche 1 oder 2, **dadurch gekennzeichnet, dass** mehrere räumlich verteilt angeordnete Basisstationen Pegelbestimmungen vornehmen und die von verschiedenen Basisstationen für ein und dasselbe Mobilgerät in einer Auswerteeinrichtung zur Positionsbestimmung verknüpft werden.

4. Verfahren nach einem der Ansprüche 1 bis 3, **dadurch gekennzeichnet, dass** die Pegelbestimmung anhand von Signalen aus einer laufenden Datenkommunikation vorgenommen wird.

5. Verfahren nach einem der Ansprüche 1 bis 4, **dadurch gekennzeichnet, dass** anhand von Empfangssignalen bei definierter Position des Mobilgeräts eine Kalibrierung der Positionsbestimmung vorgenommen wird.

6. Verfahren nach einem der Ansprüche 1 bis 5, **dadurch gekennzeichnet, dass** der Umfang und/oder der Inhalt der Kommunikation in Abhängigkeit von der bestimmten Position eingeschränkt wird.

7. Drahtloses lokales Kommunikationssystem mit wenigstens einer Basisstation für Funkverbindungen zu Mobilgeräten und mit einer Auswerteeinrichtung zur Positionsbestimmung von Mobilgeräten anhand von Empfangssignalpegeln, **dadurch gekennzeichnet, dass** die Einrichtungen zur Pegelbestimmung in der Basisstation vorhanden sind und die Basisstation die bestimmten Pegelwerte mit Zuordnung zu individuellen Mobilgeräten und/oder daraus in der Basisstation abgeleitete Daten an die Auswerteeinrichtung übermittelt.

8. Kommunikationssystem nach Anspruch 7, **dadurch gekennzeichnet, dass** die Mobilgeräte aus von dem Kommunikationssystem unabhängigen Datenendgeräten und mit diesen lösbar über standardisierte Schnittstellen verbundenen Adaptereinrichtungen, welche auf das Kommunikationssystem abgestimmt sind und eine Schnittstelle zur drahtlosen Kommunikation der Datenendgeräte in dem Kommunikationssystem enthalten, zusammengesetzt sind.

9. Kommunikationssystem nach Anspruch 8, **dadurch gekennzeichnet, dass** die Basisstation Anforderungssignale aussendet, dass die Adaptereinrichtungen die Anforderungssignale erkennen und daraufhin Antwortsignale zurücksenden.

10. Kommunikationssysteme nach Anspruch 8, **dadurch gekennzeichnet, dass** die Adaptereinrichtungen die Rücksendung der Antwortsignale ohne Einbindung des Datenendgeräts ausführen.

11. Kommunikationssystem nach einem der Ansprüche 6 bis 9, **dadurch gekennzeichnet, dass** mehrere Basisstationen räumlich verteilt angeordnet und mit der Auswerteeinrichtung verbunden sind.
